(19) Europäisches Patentamt
European Patent Office
Office européen des brevets

(11) EP 1 738 164 B1

(12) **EUROPÄISCHE PATENTSCHRIFT**

(45) Veröffentlichungstag und Bekanntmachung des Hinweises auf die Patenterteilung:
**15.05.2013 Patentblatt 2013/20**

(21) Anmeldenummer: **05716401.4**

(22) Anmeldetag: **26.03.2005**

(51) Int Cl.:
***G01N 31/22*** *(2006.01)* ***G01N 33/14*** *(2006.01)*

(86) Internationale Anmeldenummer:
**PCT/EP2005/003236**

(87) Internationale Veröffentlichungsnummer:
**WO 2005/106457 (10.11.2005 Gazette 2005/45)**

(54) **Verfahren zur Bestimmung von Stickstoffkomponenten in Wein**

Test kit and method for the determination of nitrogen components in wine

Procédé pour détecter les composants nitriques dans le vin

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **21.04.2004 EP 04009399**

(43) Veröffentlichungstag der Anmeldung:
**03.01.2007 Patentblatt 2007/01**

(73) Patentinhaber: **Merck Patent GmbH**
**64293 Darmstadt (DE)**

(72) Erfinder:
- **TANZER, Dieter**
  **64380 Rossdorf (DE)**
- **BAUER, Marianne**
  **64521 Gross-Gerau (DE)**

(56) Entgegenhaltungen:
**EP-A- 1 037 045 US-A- 4 223 089**
**US-A- 4 548 906**

- **DE ORDUNA RAMON MIRA: "Quantitative determination of L-arginine by enzymatic end-point analysis" JOURNAL OF AGRICULTURAL AND FOOD CHEMISTRY, Bd. 49, Nr. 2, Februar 2001 (2001-02), Seiten 549-552, XP002332248 ISSN: 0021-8561**
- **DATABASE WPI Section Ch, Week 198645 Derwent Publications Ltd., London, GB; Class A18,Seite 5, AN 1986-295224 XP002332259 & JP 61 217369 A (OKADA Y) 26. September 1986 (1986-09-26)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft ein Verfahren zur raschen Bestimmung des Gehaltes an hefeverfügbaren Stickstoffkomponenten in Most und Wein.

Der Gesamt-Stickstoffgehalt von Traubenmost ist von vielen Faktoren, insbesondere von weinbaulichen Faktoren, wie z.B. dem Standort (Boden, Mikroklima), der Bodenbearbeitung und Düngung, der Rebsorte, dem Gesundheitszustand und Reifezustand des Traubenmaterials und der Ernte (Zeitpunkt, Technik) abhängig. Er ist somit stark jahrgangs- aber auch enorm witterungsabhängig. Kellereiwirtschaftliche Faktoren wie z.B. die Malschebehandlung, Mostbehandlung und Presstechnik sind von untergeordneter Bedeutung.
Der Gesamt-Stickstoffgehalt beträgt im Mittel 100 bis 500 mg/l

Er verteilt sich nach Literaturangaben (Bergner, Lemperle: Weinkompendium (1998) Verlag Hirzel, Stuttgart und Ullmann, Enzyklopädie der technischen Chemie (1983), Band 24, Kapitel Wein; Verlag Chemie, Weinheim) in etwa wie nachfolgend angegeben:

Protein-N 30 bis 40 mg/l
Aminosäuren-N 30 - 200 mg/l
Ammonium-N 20 - 200 mg/l

Die zur Weinbereitung eingesetzten Hefen finden in Traubenmosten jedoch nicht immer die erforderlichen Nährstoffe, die für einen optimalen Gärverlauf erforderlich sind.
Für ihre Vermehrung und Stoffwechselprozesse kann die Hefe nur Ammonium und einige Aminosäuren verwerten. Nicht jede Aminosäure ist dabei für die Hefe gleich wertvoll. Arginin und Prolin sind die Hauptaminosäuren im Traubenmost. Während die Aminosäure Arginin aufgrund ihrer drei zugänglichen Stickstoffatome für die Hefe sehr wertvoll ist, ist die Aminosäure Prolin für die Hefe vollkommen unbrauchbar. Höhermolekulare Stickstoffverbindungen, wie Eiweißstoffe, werden von der Hefe nicht aufgenommen. (Würdig, Wohler: Chemie des Weines, Handbuch der Lebensmitteltechnologie (1989) Verlag Eugen Ulmer, Stuttgart; R. Amann, J. Sigler, H. Krebs; Der Badische Winzer, August 2001, S. 30-33).

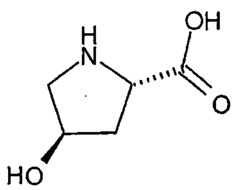

*Prolin*

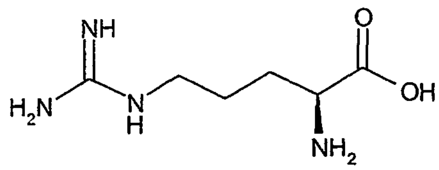

*Arginin*

Mit Blick auf eine optimale Weinqualität ist es unerlässlich, dass der Hefe für ihre eigene Ernährung während der Gärung gut verwertbarer Stickstoff in ausreichender Menge zur Verfügung steht. Die Kenntnis des Stickstoffangebotes ist die Grundlage für das Ergreifen geeigneter Maßnahmen wie z.B. die Zugabe von N-Dünger in Form von Ammoniumphophat.

Zur Messung des hefeverfügbaren Stickstoffs werden bislang folgende Methoden eingesetzt (R. Amann, J. Sigler, H. Krebs; Der Badische Winzer, August 2001, S. 30-33):

a) Spezifische Bestimmung von Ammonium und einzelner Aminosäuren:

Diese Bestimmungen sind apparativ sehr aufwendig und benötigen sehr viel Zeit, was natürlich hohe Kosten nach sich zieht.

b) Bestimmung des Gesamtstickstoffgehaltes:

Der Gesamtstickstoffgehalt eines Mostes ist deutlich höher als der hefeverfügbare Stickstoff, da auch der Stickstoff aus Peptiden, Proteinen und der Aminosäure Prolin miterfasst wird. Er ist damit kein vernünftiges Messkriterium zur Bewertung des Nährstoffangebotes.
Bei der Bestimmung wird der Most zunächst mit konzentrierter Schwefelsäure gekocht, wobei alle N-Verbindungen in Ammonium überführt werden. Der Ammonium-Gehalt wird dann nach Neutralisation und Destillation titrimetrisch ermittelt. Der Aufwand dieser Bestimmung ist sehr groß und die Bestimmung wenig reproduzierbar.

c) Bestimmung der Formolzahl:

Bei der Bestimmung der Formolzahl werden neben dem freien Ammonium alle Aminogruppen (NH2) der Aminosäuren erfasst, nicht aber die drei zusätzlichen Stickstoffatome von Arginin. Insbesondere bei Mosten mit hohen Arginingehalten ist damit ein beträchtlicher Teil des hefeverfügbaren Stickstoffs nicht enthalten, während ein Teil des für die Hefe nicht nutzbaren Prolin-Stickstoffes miterfasst wird. Als Ergebnis erhält man bei der Formolzahlbestimmung nur einen Zahlenwert und keine Konzentrationsangabe des Stickstoffgehaltes.
Die Titration, die der Bestimmung zugrunde liegt, ist zwar apparativ wenig aufwändig, es muss allerdings mit gesundheitsschädlichem Formaldehyd umgegangen werden.

d) NOPA-Methode:

Der Name leitet sich von einer Reaktion von Stickstoff (N) mit dem Reagenz OPA (ortho-Phtalaldehyd) ab. Erfasst werden mittels einer photometrischen Messung alle $NH_2$-Gruppen der Aminosäuren. Freies Ammonium und die zusätzlichen Stickstoffgruppierungen im Arginin entziehen sich der Bestimmung, so dass diese Methode nur eine geringe Aussage bzgl. des Nährstoffangebotes zulässt.

e) Infrarotspektroskopische Bestimmung (C.-D- Patz, A. Giehl, H. Dietrich; Der Deutsche Weinbau, 20, 2000, S. 30-33)

Die Infrarotspektroskopie hat als Multidetektionsmethode Einzug in große Laboratorien mit sehr hohem Analyseaufkommen gehalten. Mit Hilfe der Flüssig-FTIR ist es möglich, Moste bzw. Weine ohne Probenvorbereitung (ggf. nach Filtration) in wenigen Minuten auf einen großen Teil der signifikanten Parameter zu untersuchen. Zur Erzielung zuverlässigeiquantitativer Messergebnisse sind jedoch aufwändige Kalibrationsmessungen unerlässlich. Quantifizierungen im unteren ppm-Bereich bereiten außerdem nach wie vor große Schwierigkeiten, weshalb dieses Verfahren noch keine Akzeptanz gefunden hat.

f) Geisenheimer Testkit der Firma Erbslöh, Getränketechnologie:

Bei dieser photometrisch enzymatischen Bestimmung wird neben dem freiem Ammonium selektiv die Aminosäure Arginin, die eine der beiden Hauptaminosäuren in Traubenmosten darstellt, erfasst. Diese Bestimmungsmethode gibt einen guten Überblick über das Nährstoffangebot eines Traubenmostes, ist von allen Methoden die am meisten anerkannte und als fertige Testkombination im Handel erhältlich (Firma Erbslöh, Geisenheim). Die Durchführung ist jedoch äußerst kompliziert und zeitaufwändig und erfordert ein Photometer.

Allen Verfahren ist gemeinsam, daß die Bestimmung sehr komplex und zeitaufwändig ist. Die Bestimmung kann nur von Fachpersonal durchgeführt werden und erfordert eine entsprechende Geräteausstattung. Eine rasche Überprüfung des N-Angebotes von ungelerntem Personal mit dem Ziel einer sofortigen Entscheidungsfindung hinsichtlich der Prozessführung ist bisher nicht möglich. Die Haltbarkeit des kommerziell erhältlichen Tests gemäß Beispiel f) ist mit 6 Wochen zudem sehr kurz. Alle Bestimmungen (ca. 20 pro Test) müssen daher in kurzer Zeit (maximal innerhalb von 6 Wochen) durchgeführt werden.

In jüngerer Zeit hat die Analyse mit festen, saugfähigen Trägern, den sogenannten Teststäbchen, zunehmend an Bedeutung gewonnen. Zu den wesentlichen Vorteilen dieser trockenchemischen Verfahren gehören insbesondere die einfache Handhabung sowie die aufgrund der geringen Reagenzmengen unproblematische Entsorgung. Alle oder der größte Teil der für die Nachweisreaktion notwendigen Reagenzien sind dabei in entsprechenden Schichten eines festen, saugfähigen oder quellbaren Trägers eingebettet, auf den die Probe aufgebracht wird. Nach Kontakt der Reaktionszone mit der Probe läuft die Nachweisreaktion ab. Die gebildete Farbe ist ein Maß für die Menge des zu bestimmenden Analyts und kann visuell, d.h. halbquantitativ bzw. quantitativ mit einfachen Reflektometern ausgewertet werden.

Teststäbchen zur Bestimmung von Ammonium in wässrigen Lösungen sind im Handel erhältlich (z.B. Merck MQ bzw. RQ Ammonium-Test, Firma Merck KGaA, Darmstadt). Die Teststäbchen werden zur Analyse in die Probe eingetaucht.
Wesentlicher Nachteil dieser Teststäbchen ist, dass geringe Ammoniumgehalte, wie sie in Most vorliegen, entweder nicht ausreichend erfasst werden können bzw. Störungen der Bestimmung durch die komplizierte und saure (pH ca. 2,8 - 3,5) Weinmatrix erfolgen. Eine Anwendung bei gefärbten Proben, wie z.B. Rotweinen, ist durch die Störung durch Eigenfärbung der Probe nur bedingt möglich, da die Teststäbchen direkt in Kontakt mit der zu untersuchenden Probenflüssigkeit kommen.
Für eine Bestimmung einzelner Aminosäuren stehen keine Tests auf Basis von Teststreifen zur Verfügung.

Der vorliegenden Erfindung liegt die Aufgabe zu Grunde, ein einfaches Verfahren zur Bestimmung von Hefeverfügbaren Stickstoff in Most-/Weinproben zur Verfügung zu stellen, das obige Nachteile nicht aufweist, das einfach und schnell in der Ausführung, kostengünstig und in Form eines Testsatzes gut lagerfähig ist. Insbesondere sollte das

erfindungsgemäße Verfahren nicht nur einer halbquantitativen, visuellen, sondern auch einer quantitativen Auswertung mit einem Reflektometer zugänglich sein.

Es wurde gefunden, dass die Ermittlung des Hefeverfügbaren Stickstoffangebotes auf Basis der Bestimmung von freiem Ammonium sowie der Bestimmung der Summe an freiem Ammonium und dem aus der Aminosäure Arginin zusätzlich freigesetztem Ammonium (nachfolgend als Gesamtammonium bezeichnet) tatsächlich einfach und schnell möglich ist, wenn ein entsprechend vorbehandeltes Teststäbchen verwendet wird, mit dem die Analyse in der Gasphase oberhalb der Probe erfolgen kann. Es wurde festgestellt, dass dabei der Gehalt an Ammonium in der Gasphase über der Probe als Maß für die Konzentration an Ammonium in der Probe eingesetzt werden kann.

Ein Test-Kit, derselbst nicht Teil der Erfindung ist, enthält mehrere Teststreifen und mehrere Analysengefäße.

Der Teststreifen enthält als Nachweisreagenz vorzugsweise Kaliumiodid und Quecksilberiodid.

Besonders bevorzugt enthält der Test-Kit einen Teststreifen, der mit 0,5 bis 5%igen Lösungen von Kaliumiodid und Quecksilberiodid getränkt wurde.

In einer anderen bevorzugten Ausführungsform enthält der Test-Kit zusätzlich eine oder mehrere der folgenden Komponenten:

- 0,1 mol/l NaOH-Lösung
- 32%ige NaOH-Lösung
- alkalische Pufferlösung zum Verdünnen der Probelösung
- die beiden Enzyme Arginase und Urease in gelöster Form.

Gegenstand der Erfindung ist ein Verfahren zur Bestimmung von hefeverfügbarem Stickstoff in Most und Wein, gekennzeichnet durch folgende Verfahrensschritte:

a) Bereitstellen eines Test-Kits
b) Zugabe der Probelösung in das Analysengefäß,
c) optional Zugabe der Enzyme Arginase und Urease zur Freisetzung von Ammonium aus Arginin und Inkubation,
d) alkalisch machen der Probelösung zum Austreiben des Ammoniums als Ammoniak,
e) Einführen des angefeuchteten Teststäbchens in den Gasraum oberhalb der Probe und Verschließen des Analysengefäßes,
f) qualitative und/oder quantitative Analyse der Farbentwicklung auf dem Teststreifen.

In einer bevorzugten Ausführungsform wird in Schritt e) ein mit 0,1 mol/l NaOH Lösung angefeuchtetes Teststäbchen eingesetzt.

In einer anderen bevorzugten Ausführungsform wird die Probe in Schritt d) mit 32%iger NaOH Lösung alkalisch gemacht.

In einer weiteren bevorzugten Ausführungsform erfolgt die quantitative Analyse in Schritt f) mit einem Reflektometer.

Abbildung 1 zeigt eine schematische Darstellung des Analysegefäßes und der Positionierung des Teststäbchens.

Abbildung 2 und 3 zeigen das Ergebnis eines Vergleich des erfindungsgemäßen Verfahrens mit einer photometrischen Bestimmung. Nähere Angaben finden sich in den Beispielen 2 und 3.

Als Most und Wein werden erfindungsgemäß alle aus Trauben erhältlichen flüssigen Produkte bezeichnet. Das erfindungsgemäße Verfahren ist bezüglich seiner Empfindlichkeit und Handhabung speziell auf die besonderen Anfordernisse von Most und Wein ausgelegt, da diese wie oben dargelegt aufgrund ihrer Zusammensetzung (Färbung, pH-Wert etc.) besonders hohe Anforderungen an eine Analyse stellen. Natürlich kann das erfindungsgemäße Verfahren aber auch zur Bestimmung von entsprechenden Stickstoff-Komponenten in anderen wässrigen Flüssigkeiten eingesetzt werden. Auch diese Flüssigkeiten werden daher erfindungsgemäß von dem Begriff Most und Wein mit erfasst.

Das Nachweissystem, d.h. das Teststäbchen, liegt in Form einer imprägnierten Matrix vor, d.h. alle für den selektiven Nachweis von Ammonium notwendigen Reagenzien (farbgebendes Reagenz, Puffersystem, ggf. auch Stabilisatoren und Lösungsvermittler) sind in einen saugfähigen Träger eingebettet. Die resultierende Farbreaktion wird reflektometrisch oder visuell durch Vergleich mit einer Farbkarte ausgewertet.

Mit dem Teststäbchen wird Stickstoff in Form von Ammonium nachgewiesen. Dabei kann zum einen freies Ammonium bestimmt werden und zum anderen Ammonium, das zuvor aus Arginin freigesetzt wurde. Somit ist zusätzlich eine Unterscheidung der Quelle des Hefeverfügbaren Stickstoffs möglich.

Die Freisetzung von Ammonium aus Arginin erfolgt auf enzymatischem Weg entsprechend einem Verfahren gemäß folgendem bekannten Reaktionsschema:

- Abbau des Arginins durch das Enzym Arginase zu Harnstoff

$$\text{L-Arginin} + H_2O \xrightarrow{\text{Arginase}} \text{L-Ornithin} + \text{Harnstoff}$$

- Abbau des Harnstoffs durch das Enzym Urease zu Ammoniak

$$\text{Harnstoff} + H_2O \xrightarrow{\text{Urease}} CO_2 + 2\ NH_3$$

Voraussetzung für eine einfache Durchführung der Bestimmung ist die Möglichkeit einer einfachen Zugabe der Enzyme zur Probe. Die geeignetste Dosierungsform ist die Zugabe in Tropfenform.
Es hat sich gezeigt, dass eine enzymatische Umsetzung direkt in der Original-Weinmatrix nicht möglich ist, da eine Störung durch Weininhaltsstoffe bzw. durch die saure Weinmatrix erfolgt. Große Vorverdünnungen des Weines sind nicht möglich, da dadurch die notwendige Sensitivität des Nachweissystems nicht mehr gewährleistet ist. Es wurde gefunden, dass eine Verdünnung des Weines im Verhältnis 1:1 bis 1:5 mit einem alkalischen Puffersystems mit pH 9-10 eine gute Umsetzung ermöglicht. Als besonders geeignet hat sich ein Triethanolaminhydrochlorid/NaOH-Puffer, insbesondere ein Triethanolaminhydrochlorid/NaOH-Puffer mit pH 9,35 erwiesen (Herstellung siehe Praxistest 2). Höhere Verdünnungen als 1:5 sind aufgrund des Empfindlichkeitsverlusts nicht sinnvoll, bevorzugt sind Verdünnungen im Verhältnis von ca. 1:1.

Zur Bestimmung von Gesamtammonium (Summe aus freiem Ammonium und Ammonium aus Arginin) wird daher die Probe vor Einsatz des Teststäbchens durch Vorverdünnen des Weines mit einem alkalischen Puffer und Zugabe der beiden Enzyme vorbehandelt.

Die Enzyme liegen dazu typischerweise jeweils in wässriger Lösung vor. Bevorzugt sind Lösungen, in denen das jeweilige Enzym besonders lange stabil und aktiv bleibt.
Bei der Urease-Lösung handelt es sich bevorzugt um eine gepufferte Glycerinlösung (pH ca. 6,1). Die Urease-Aktivität sollte pro Bestimmung im Bereich 10 - 30 U/l, bevorzugt bei ca. 20 U/l liegen.
Bei der Arginase-Lösung handelt es sich bevorzugt um einen manganhaltigen Maleinsäure-Puffer (pH ca. 7,0). Die Arginase-Aktivität sollte pro Bestimmung im Bereich 3 - 10 U/l, bevorzugt bei ca. 5 U/l liegen. Die gesamte Reaktion sollte im Bereich von 19 - 23 °C durchgeführt werden, andernfalls kann es zu Abweichungen von über 10% kommen. Die Dauer der Inkubation der Probe mit den Enzym-Lösungen beträgt typischerweise 15 Minuten bis mehrere Stunden, bevorzugt 20 bis 30 Minuten.

Es wurde gefunden, dass die Analyse des Ammoniums nicht direkt in der Probelösung, d.h. im Most und Wein erfolgen kann, sondern nur in der Gasphase oberhalb der Probe möglich ist.
Dazu wird ein Teststäbchen verwendet, das Nachweisreagenzien für Ammonium bzw. Ammoniak aufweist.

Als Nachweissystem sind alle ammoniumselektiven Nachweisreaktionen möglich. Besonders bevorzugt ist der bekannte Nachweis mit "Nesslers Reagenz" ($K_2HgI_4$) wie nachfolgend dargestellt (Jander, Blasius: Lehrbuch der analytischen und präparativen anorganischen Chemie (1979) Verlag Hirzel, Stuttgart).

$$NH_3 + 2\ HgI_4{}^{2-} + 3\ OH^- \rightarrow Hg_2NI \cdot H_2O + 2\ H_2O + 7\ I^-$$

In diesem Fall wird das Teststäbchen mit einer Tränklösung aus Kaliumiodid und Quecksilberiodid behandelt. Als geeignet haben sich Tränklösungen erwiesen, die 0,5 bis 5 Gewichts%, bevorzugt ca. 1%, des jeweiligen Iodids enthalten. Als Lösungsmittel wird typischerweise Wasser oder Mischungen von Wasser mit darin mischbaren organischen Lösungsmitteln wie Methanol verwendet.

Als saugfähige Träger können alle Materialien verwendet werden, die üblicherweise für solche Tests im Gebrauch sind. Am weitesten verbreitet ist die Verwendung von Filterpapier, jedoch können auch andere saugfähige Cellulose- oder Kunststoffprodukte eingesetzt werden. Die saugfähigen Träger werden in bekannter Weise mit Tränklösungen imprägniert, die alle zur Bestimmung notwendigen Reagenzien enthalten. Die getränkten und getrockneten Papiere können geeignet zugeschnitten und in bekannter Weise auf Trägerfolien aufgeklebt bzw. aufgesiegelt werden.

Um eine Reaktion des Analyten in der Gasphase mit dem Reagenziensystem des Teststäbchens zu ermöglichen, muss dieses vor der Reaktion angefeuchtet werden. Zum Anfeuchten hat sich Wasser als wenig geeignet erwiesen.
Überraschenderweise wurde gefunden, daß ein Anfeuchten mit einem, in Abhängigkeit von der verwendeten Nachweisreaktion, geeigneten Reagenz zu besonders hoher Sensitivität und gleichmäßiger Verfärbung des Reaktionsfeldes führt. Im Falle der Nachweises mit Nesslers Reagenz haben sich verdünnte Basen, insbesondere anorganische Basen wie NaOH oder KOH, als geeignet erwiesen. Besonders bevorzugt ist verdünnte Natronlauge (0,05 bis 0,5 mol/l, bevorzugt

ca. 0,05 bis 0,1 mol/l).

Eine Bestimmung von Ammonium über der flüssigen Probelösung kann direkt mit dem angefeuchteten, ammoniumselektiven Teststäbchen erfolgen. Um die notwendige Sensitivität des Nachweissystems zu erreichen, muss der pH-Wert der Probelösung alkalisch eingestellt werden. Bevorzugt ist ein pH-Wert >11, da bei diesem pH-Wert Ammonium-Ionen vollständig in Form von hochflüchtigen Ammoniak vorliegen. Zum Alkalisieren sind prinzipiell alle starken Basen oder Puffersysteme geeignet. Als besonders geeignet hat sich 32%ige Natronlauge erwiesen.

In Abbildung 1 ist eine mögliche Ausführungsform des Nachweissystems dargestellt. Dabei wird das Teststäbchen zur Analyse in den Gasraum oberhalb der Probe eingeführt und mit einem Deckel fixiert. In einer bevorzugten Ausführungsform ist der geeignete Abstand des Teststreifens von der Probelösung wie in Abbildung 1 gezeigt durch z.B. ringförmige Markierungen auf dem Analysengefäß gekennzeichnet

Durch Veränderung der Größe und Form des verwendeten Analysegefäßes, der Position des Teststäbchens bei der Bestimmung sowie der verwendeten Probemenge kann die Sensitivität des Nachweissystems und die Reproduzierbarkeit der Bestimmung, allerdings nur geringfügig, beeinflusst werden.

Als besonders vorteilhaft haben sich Gefäße mit einem Volumen von 15 - 50 ml und Probemengen von 0,5 -1,0 ml erwiesen.

Um einen unerwünschten Kontakt der Reaktionszone des Teststäbchens mit der Probelösung zu vermeiden, muss das Teststäbchen in ausreichend großem Abstand über der Probe positioniert werden. In einer bevorzugten Ausführungsform gibt eine Markierung auf dem Teststäbchen an, wie weit es in das Analysengefäß eingeführt werden soll.

Das erfindungsgemäße Verfahren umfaßt demnach folgende Verfahrensschritte:

a) Bereitstellen eines Test-Kits zumindest bestehend aus Teststreifen und verschließbarem Analysengefäß

b) Zugabe der Probelösung in das Analysengefäß. Bei der Probelösung kann es sich dabei um den reinen Most oder Wein handeln oder insbesondere zum Nachweis des Gesamt-Ammoniums um Most oder Wein, die mit einem alkalischen Puffersystems mit pH 9 -10 wie oben ausgeführt verdünnt wurden.

c) optional Zugabe der Enzyme Arginase und Urease zur Freisetzung von Ammonium aus Arginin und Inkubation. Dieser Schritt wird nur für die Bestimmung des Gesamt-Ammoniums durchgeführt.

d) Alkalisch machen der Probelösung zum Austreiben des Ammoniums als Ammoniak

e) Einführen des angefeuchteten Teststäbchens in den Gasraum oberhalb der Probe und Verschließen des Analysengefäßes

f) Qualitative und/oder quantitative Analyse der Farbentwicklung auf dem Teststreifen. Die Analyse erfolgt nach einer kurzen Inkubationszeit von wenigen Minuten, typischerweise 3 bis 8 Minuten, bevorzugt ca. 5 Minuten.

Der Test-Kit beinhaltet zumindest ein Teststäbchen zum Nachweis von Ammoniak in der Gasphase und ein verschließbares Analysengefäß. Weitere optionale Bestandteile sind Lösungen zum Anfeuchten des Teststäbchens, zum Verdünnen der Probelösung oder zum alkalisch machen der Probelösung. Genauso kann der Test-Kit die Enzyme Arginase und/oder Urease in fester oder gelöster Form enthalten.

In einer bevorzugten Ausführungsform ist das Teststäbchen des Test-Kits mit Nesslers Reagenz, d.h. mit Kaliumiodid und Quecksilberiodid, getränkt.

In einer weiteren bevorzugten Ausführungsform enthält der Testkit zusätzlich eine oder mehrere der folgenden Komponenten: 0,1 mol/l NaOH-Lösung zum Anfeuchten des Teststäbchens, 32%ige NaOH-Lösung zum Austreiben des Ammoniums, alkalische Pufferlösung zum Verdünnen der Probelösung und die beiden Enzyme Arginase und Urease in gelöster Form.

Neben der großen Empfindlichkeit des Test-Kits und seiner einfachen Handhabung ist ein weiterer Vorteil seine große Lagerstabilität. Sowohl das Teststäbchen wie auch die Pufferlösungen sind über mehrere Monate bis Jahre stabil. Sogar die Enzymlösungen sind über mehrere Monate stabil, sofern sie z.B. entsprechend den Angaben in Beispiel 3 angefertigt wurden.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, insbesondere der korrespondierenden Anmeldung EP 04 009 399.9, eingereicht am 21.04.2004, ist durch Bezugnahme in diese Anmeldung eingeführt.

## Beispiele

Beispiel 1:

Bestimmung von freiem Ammonium in Traubenmost/Wein - reflektometrische Auswertung der Reaktionsfarbe:

Herstellung der Teststäbchen:

Auf ein Filterpapier (z.B. Fa. Binzer, 1450 CV; säuregewaschen) wird nachfolgende Tränklösung aufgebracht und danach mit warmer Luft getrocknet. Das Papier wird mit Schmelzkleber (z.B. Kleber Dynapol S 1272) auf eine weiße Trägerfolie aufgesiegelt und geeignet in Streifen geschnitten, so daß eine Reaktionszone von ca. 6 mm x 8 mm resultiert.

Zusammensetzung der Tränklösung:

In einem Wasser/Methanolgemisch (1:1) werden Kaliumjodid und Quecksilberjodid gelöst, so dass jeweils eine 1 %ige Lösung vorliegt.

Analyse:

| | | |
|---|---|---|
| 1) Vorbereitete Probelösung | 1,0 ml | In das Testgefäß (ca. 20 ml) geben |
| 3) NaOH, 0,1 mol/l | 1 Tropfen | Reaktionszone des Analysenstäbchens anfeuchten und auf einem Allzwecktuch überschüssigen Tropfen abkanten. |
| 3) 32%ige NaOH | 5 Tropfen | Testgefäß öffnen und zutropfen.<br>Deckel des Meßgefäßes mit geeignet befestigten Stäbchen (siehe Abbildung) sofort verschließen |

In Abhängigkeit vom Grad an Ammonium in der Probelösung bildet sich eine gelbbraune Färbung, die reflektometrisch oder durch Vergleich mit einer Farbkarte nach 3 -5 Minuten ausgewertet werden kann. In

Zur quantitativen Auswertung werden die Teststreifen nach geeigneter Reaktionszeit in einem kleinen Handreflektometer auf Diodenbasis (Reflektometer RQflex®) ausgewertet. Den Zusammenhang zwischen der gemessenen relativen Remission (%) und dem Gehalt an Ammonium zeigt Tabelle 1.

Tabelle 1

| $NH_4$ (mg/l) | % Rem |
|---|---|
| 0 | 75 |
| 15 | 70 |
| 25 | 65 |
| 50 | 55 |
| 75 | 45 |
| 100 | 40 |
| 150 | 35 |

Beispiel 2:

Praxistest 1:

Mit dem erfindungsgemäßen Verfahren wurden verschiedene Weinproben untersucht und das Ergebnis mit dem photometrischen Verfahren verglichen.

Das Ergebnis ist in Abbildung 2 dargestellt, wobei die schraffierten Balken das Ergebnis der erfindungsgemäßen reflektometrischen Analyse aufzeigen und die gepunkteten Balken das der photometrischen Analyse. Auf der Abszisse sind die Proben 1 bis 11 aufgetragen, auf der Ordinate die $NH_3$-Konzentration in mg/l. Es zeigt sich, das das wesentlich einfachere erfindungsgemäße Verfahren genauso empfindlich und genau ist wie das photometrische Verfahren.

Beispiel 3:

Praxistest 2:

<u>Bestimmung von Gesamt-Ammonium</u> in <u>Traubenmost/Wein - reflektometrische Auswertung der Reaktionsfarbe:</u>

<u>Pufferlösung zur Einstellung des pH-Wertes</u>

In 250 ml VE-Wasser werden 100 g Triethanolaminhydrochlorid gelöst und ca. 200 g Natronlauge (10%) zugegeben. Der pH-Wert wird mit NaOH auf 9,35 eingestellt.

<u>Zur Freisetzung von Ammonium aus Arginin werden folgende Lösungen eingesetzt:</u>

<u>Urease-Lösung:</u>

Eine Lösung aus Wasser und Glycerin (1:1) wird mit NaOH (1 mol/l) auf ca. pH 6,1 eingestellt. Urease wird darin aufgelöst. Die Urease-Aktivität pro Bestimmung beträgt ca. 20 U.

<u>Arginase-Lösung</u>

Die Herstellung der Arginase-Lösung erfolgt gemäß Bergmeyer (J. Bergmeyer: Methods of Enzymatic Analysis (1983), Band 2, Verlag Chemie, Weinheim).
Die Arginase-Aktivität pro Bestimmung beträgt ca. 5 U.

Die Herstellung der Teststäbchen erfolgt wie im Beispiel 1 beschrieben.

<u>Analyse:</u>

| | | |
|---|---|---|
| 1) Vorbereitete Probelösung | 1,0 ml | In das Testgefäß (ca. 20 ml) geben |
| 2) Pufferlösung | 1,0 ml | zugeben und mischen |
| 3) Arginase-Lösung | 3 Tropfen | zutropfen |
| 4) Urease-Lösung | 1 Tropfen | zutropfen und 20 Minuten stehen lassen. |
| 5) NaOH, 0,1 mol/l | 1 Tropfen | Reaktionszone des Analysenstäbchens anfeuchten und auf einem Allzwecktuch überschüssigen Tropfen abkanten. |
| 6) 32%ige NaOH | 5 Tropfen | Testgefäß öffnen und zutropfen.<br>Deckel des Meßgefäßes mit geeignet befestigten Stäbchen (siehe Abbildung) sofort verschließen |

In Abhängigkeit vom Grad an Ammonium in der Probelösung bildet sich eine gelbbraune Färbung, die reflektometrisch oder durch Vergleich mit einer Farbkarte nach 3 -5 Minuten ausgewertet werden kann.

Das Ergebnis ist in Abbildung 3 dargestellt, wobei die schraffierten Balken das Ergebnis der erfindungsgemäßen reflektometrischen Analyse aufzeigen und die gepunkteten Balken das der photometrischen Analyse. Auf der Abszisse sind die Proben 1 bis 11 aufgetragen, auf der Ordinate die $NH_3$-Konzentration in mg/l. Es zeigt sich, das das wesentlich einfachere erfindungsgemäße Verfahren genauso empfindlich und genau ist wie das photometrische Verfahren.

Beispiel 4:

Praxistest 3:

Bestimmung von freiem Ammonium und Gesamt-Ammonium in Traubenmost/Wein - Überprüfung der Wiederfindung bei Dotierungsversuchen im Vergleich mit photometrischem Test.

Dotierungstabelle: Alle Angaben in mg/l

| Probe Nr. | Zugabe an freiem Ammonium bzw. Arginin | | |
|---|---|---|---|
| | FA | Arginin | GA (berechnet) |
| 1 | 40 | 10 | 59 |
| 2 | 40 | 20 | 84 |
| 3 | 40 | 40 | 123 |
| 4 | 60 | 10 | 84 |
| 5 | 60 | 20 | 103 |
| 6 | 60 | 40 | 144 |
| 7 | 80 | 10 | 102 |
| 8 | 80 | 20 | 122 |
| 9 | 85 | 40 | 163 |
| FA = Freies Ammonium; GA = Gesamtammonium | | | |

Ergebnistabelle: Alle Angaben in mg/l

| Probe Nr. | Ergebnisse Photometrischer Test | | | Ergebnisse Teststreifen-Reflektometrie | | |
|---|---|---|---|---|---|---|
| | FA | ferm-N-Wert | GA (berechnet) | FA | ferm-N (berechnet) | GA |
| 1 | 43 | 9 | 61 | 44 | 12 | 68 |
| 2 | 45 | 20 | 81 | 44 | 16 | 78 |
| 3 | 44 | 40 | 123 | 45 | 26 | 99 |
| 4 | 65 | 9 | 81 | 59 | 17 | 93 |
| 5 | 65 | 19 | 101 | 63 | 21 | 106 |
| 6 | 66 | 40 | 143 | 66 | 35 | 137 |
| 7 | 83 | 10 | 101 | 76 | 15 | 107 |
| 8 | 84 | 19 | 121 | 79 | 20 | 119 |
| 9 | 85 | 40 | 163 | 80 | 32 | 145 |
| **ferm-N-Wert** = (G-$NH_4$ - F-$NH_4$) x 0,483 | | | | | | |

**Patentansprüche**

1. Verfahren zur Bestimmung von hefeverfügbarem Stickstoff in Most und Wein, **gekennzeichnet durch** folgende Verfahrensschritte:

a) Bereitstellen eines Teststäbchens zur Bestimmung von Ammoniak in der Gasphase und eines verschließbaren Analysengefäßes,
b) Zugabe der Probelösung in das Analysengefäß,
c) optional Zugabe der Enzyme Arginase und Urease zur Freisetzung von Ammonium aus Arginin und Inkubation,
d) alkalisch machen der Probelösung zum Austreiben des Ammoniums als Ammoniak,
e) Einführen des angefeuchteten Teststäbchens in den Gasraum oberhalb der Probe und Verschließen des Analysengefäßes,
f) qualitative und/oder quantitative Analyse der Farbentwicklung auf dem Teststreifen.

**2.** Verfahren nach Anspruch 1, **dadurch gekennzeichnet, dass** das Teststäbchen als Nachweisreagenz Kaliumiodid und Quecksilberiodid enthält.

**3.** Verfahren nach Anspruch 1 oder 2, **dadurch gekennzeichnet, dass** das Teststäbchen mit 0,5 bis 5%igen Lösungen von Kaliumiodid und Quecksilberiodid getränkt wurde.

**4.** Verfahren nach einem oder mehreren der Ansprüche 1 bis 3, **dadurch gekennzeichnet, dass** in Schritt e) ein mit 0,1 mol/l NaOH Lösung angefeuchtetes Teststäbchen eingesetzt wird.

**5.** Verfahren nach einem oder mehreren der Ansprüche 1 bis 4, **dadurch gekennzeichnet, dass** die Probe in Schritt d) mit 32%iger NaOH Lösung alkalisch gemacht wird.

**6.** Verfahren nach einem oder mehreren der Ansprüche 1 bis 5, **dadurch gekennzeichnet, dass** die quantitative Analyse in Schritt f) mit einem Reflektometer erfolgt.

## Claims

**1.** Method for the determination of yeast-available nitrogen in must and wine, **characterised by** the following method steps:

a) provision of a test stick for the determination of ammonia in the gas phase and a sealable analysis vessel,
b) addition of the sample solution to the analysis vessel,
c) optionally addition of the enzymes arginase and urease for the liberation of ammonium from arginine and incubation,
d) alkalinisation of the sample solution in order to expel the ammonium as ammonia,
e) introduction of the moistened test stick into the gas space above the sample and sealing of the analysis vessel,
f) qualitative and/or quantitative analysis of the colour development on the test strip.

**2.** Method according to Claim 1, **characterised in that** the test stick comprises potassium iodide and mercury iodide as detection reagent.

**3.** Method according to Claim 1 or 2, **characterised in that** the test stick has been impregnated with 0.5 to 5% solutions of potassium iodide and mercury iodide.

**4.** Method according to one or more of Claims 1 to 3, **characterised in that** a test stick moistened with 0.1 mol/l NaOH solution is employed in step e).

**5.** Method according to one or more of Claims 1 to 4, **characterised in that** the sample is alkalinised in step d) using 32% NaOH solution.

**6.** Method according to one or more of Claims 1 to 5, **characterised in that** the quantitative analysis in step f) is carried out using a reflectometer.

## Revendications

**1.** Méthode de détermination de l’azote disponible pour les levures dans du moût et du vin, **caractérisée par** les étapes

de méthode suivantes :

a) la fourniture d'une bandelette réactive pour la détermination de l'ammoniac dans la phase gazeuse et d'un récipient d'analyse scellable,
b) l'addition de la solution d'échantillon au récipient d'analyse,
c) éventuellement l'addition des enzymes arginase et uréase pour la libération d'ammonium à partir d'arginine et l'incubation,
d) l'alcalinisation de la solution d'échantillon afin d'expulser l'ammonium sous forme d'ammoniac,
e) l'introduction de la bandelette réactive humidifiée dans l'espace gazeux au-dessus de l'échantillon et le scellement du récipient d'analyse,
f) l'analyse qualitative et/ou quantitative du développement de la coloration sur la bandelette réactive.

**2.** Méthode selon la revendication 1, **caractérisée en ce que** la bandelette réactive comprend de l'iodure de potassium et de l'iodure de mercure comme réactif de détection.

**3.** Méthode selon la revendication 1 ou 2, **caractérisée en ce que** la bandelette réactive a été imprégnée par des solutions de 0,5 à 5% d'iodure de potassium et d'iodure de mercure.

**4.** Méthode selon l'une ou plusieurs parmi les revendications 1 à 3, **caractérisée en ce qu'**on utilise une bandelette réactive humidifiée par une solution de NaOH à 0,1 mol/l dans l'étape e).

**5.** Méthode selon l'une ou plusieurs parmi les revendications 1 à 4, **caractérisée en ce que** l'échantillon est alcalinisé dans l'étape d) en utilisant une solution de NaOH à 32%.

**6.** Méthode selon l'une ou plusieurs parmi les revendications 1 à 5, **caractérisée en ce que** l'analyse quantitative dans l'étape f) est effectuée à l'aide d'un réflectomètre.

Fig. 1

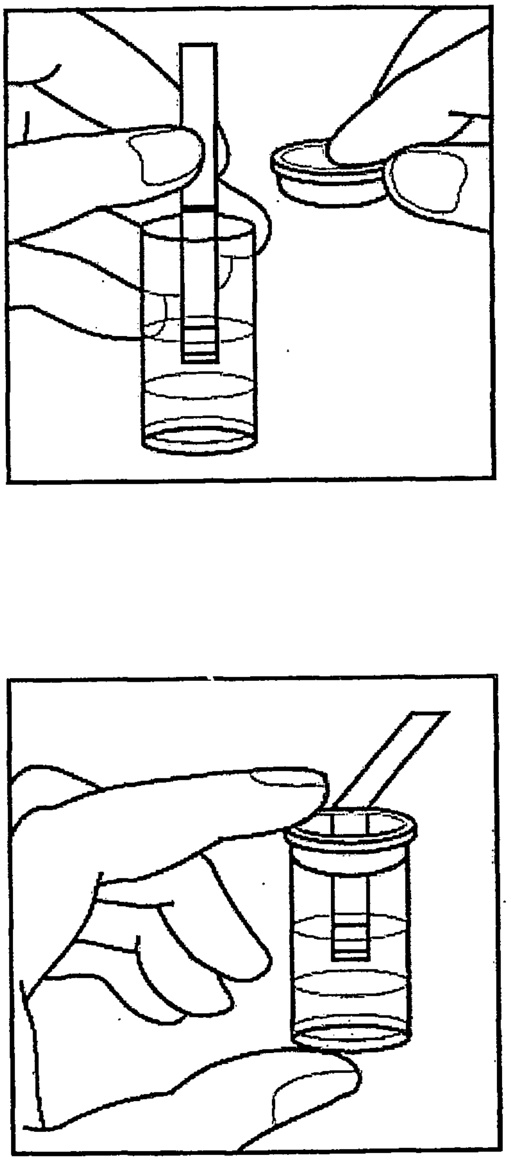

Fig. 2

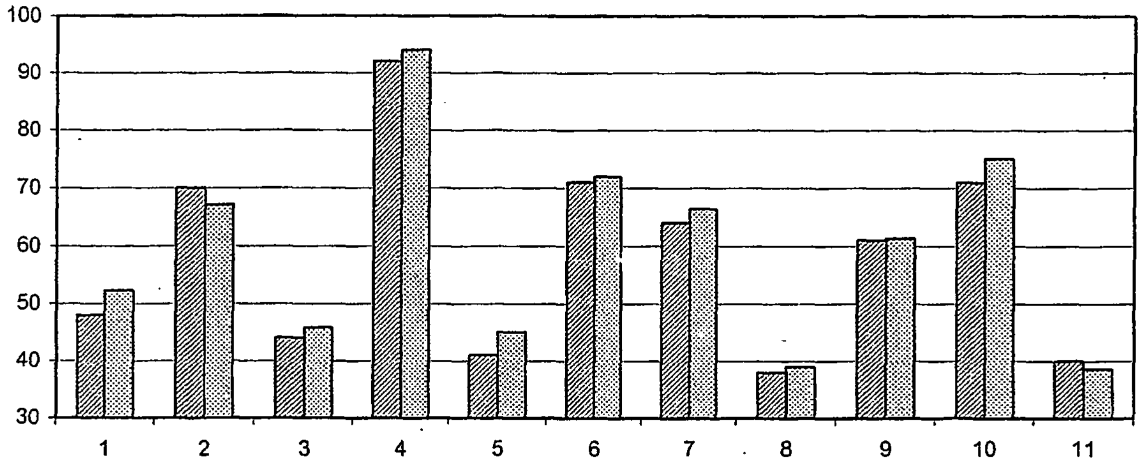

Fig. 3

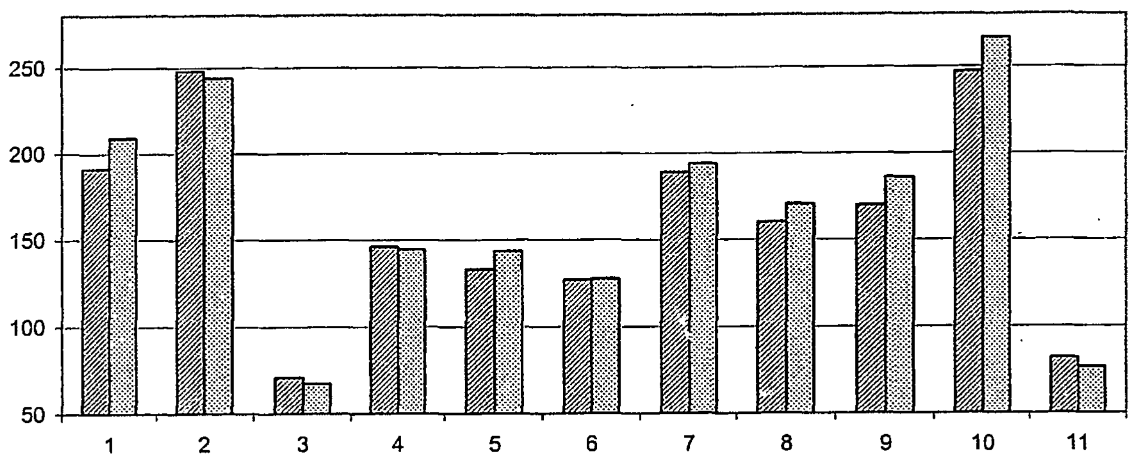

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 04009399 A


### In der Beschreibung aufgeführte Nicht-Patentliteratur


- **BERGNER, LEMPERLE.** Weinkompendium. Verlag Hirzel, 1998
- **ULLMANN.** Enzyklopädie der technischen Chemie. Verlag Chemie, 1983, vol. 24
- Chemie des Weines. **WÜRDIG, WOHLER.** Handbuch der Lebensmitteltechnologie. Verlag Eugen Ulmer, 1989
- **R. AMANN ; J. SIGLER ; H. KREBS.** *Der Badische Winzer,* August 2001, 30-33
- **J. BERGMEYER.** Methods of Enzymatic Analysis. Verlag Chemie, 1983, vol. 2